# FASCICULE DE BREVET EUROPEEN

(11) **EP 2 376 794 B1**
(45) Date de publication et mention de la délivrance du brevet: **20.03.2013**
(21) Numéro de dépôt: 10706286.1
(22) Date de dépôt: 07.01.2010
(51) Int. Cl.: F16B 21/02, F16B 5/10

(54) **DISPOSITIF POUR VERROUILLER AUTOMATIQUEMENT UN PREMIER ENSEMBLE A UN SECOND ENSEMBLE ET SON APPLICATION AU MONTAGE D'UN ENSEMBLE SOUS CAISSE SOUS LA CAISSE D'UN VEHICULE AUTOMOBILE**
VORRICHTUNG ZUM AUTOMATISCHEN VERRIEGELN EINER ERSTEN ANORDNUNG MIT EINER ZWEITEN ANORDNUNG UND IHRE ANWENDUNG BEI DER UNTERBODENMONTAGE UNTER DEM BODEN EINES KRAFTFAHRZEUGS
DEVICE FOR LOCKING AUTOMATICALLY A FIRSTASSEMBLY TO A SECOND ASSEMBLY AND ITS APPLICATION FOR MOUNTING UNDERBODY AN ASSEMBLY UNDER THE BODY OF A MOTOR VEHICLE

(30) Priorité: 14.01.2009 FR 0950185
(43) Date de publication de la demande: 19.10.2011
(73) Titulaire: Renault S.A.S., 92100 Boulogne-Billancourt (FR)
(72) Inventeur: ESCANDE, Bruno, F-78790 Septeuil (FR); LOMBARTE, Charles, F-78640 Saint Germain de la Grange (FR)
(86) Numéro de dépôt international: PCT/FR2010/050016
(87) Numéro de publication internationale: WO 2010/081978

(56) Documents cités:
- EP-A- 1 902 899
- DE-A1- 2 804 848

## Description

La présente invention concerne un dispositif pour verrouiller un premier ensemble à un second ensemble situé au-dessus du premier ensemble, en particulier selon le préambule de la revendication 1. Un tel dispositif est connue du document DE 2804848A1.

L'invention s'applique en particulier au montage d'un ensemble sous caisse complet sous la caisse d'un véhicule automobile.

Dans cette application, le support de la caisse est généralement constitué par une balancelle entraînée par un convoyeur aérien et la base porteuse est soulevée vers la balancelle par une table élévatrice dans un poste d'accostage.

Lors de la levée de la base porteuse, l'organe de verrouillage de chacun des verrous portés par la base porteuse s'engage dans un évidement réalisé sur la balancelle, puis se verrouille sur une surface d'appui réalisée sur la périphérie de l'évidement après une rotation angulaire de l'organe de verrouillage.

Dans les réalisations actuelles, cette rotation angulaire est effectuée au moyen de leviers actionnés par des opérateurs, ce qui augmente le coût du montage.

Le déverrouillage est réalisé au moyen de ressorts de rappel extérieurs aux verrous, reliés à la tringlerie du mécanisme manuel de commande du verrouillage.

Ces ressorts et cette tringlerie encombrent l'installation.

Le but de la présente invention est de créer un dispositif de verrouillage qui remédie aux inconvénients ci-dessus tout en étant applicable à toute application dans laquelle on doit verrouiller un premier ensemble à un second ensemble situé au-dessus du premier ensemble.

Ce but est atteint, selon l'invention, grâce à un dispositif pour verrouiller un premier ensemble à un second ensemble situé au-dessus du premier ensemble, comprenant au moins un verrou fixé sur le premier ensemble et comportant un organe de verrouillage pouvant s'engager dans un évidement réalisé sur le second ensemble, lors d'un déplacement relatif de l'un des deux ensembles par rapport à l'autre, et se verrouiller sur une surface d'appui réalisée sur la périphérie de l'évidement par rotation angulaire commandée de cet organe de verrouillage, caractérisé en ce qu'il comprend un actionneur pour commander la rotation angulaire de l'organe de verrouillage afin de verrouiller celui-ci sur ladite surface d'appui et un ressort de rappel intégré dans le verrou pour commander le déverrouillage de l'organe de verrouillage de ladite surface d'appui, et en ce que ledit organe de verrouillage coopère avec le ressort de rappel de façon à mettre celui-ci, sous tension mécanique lors de la rotation angulaire commandée par l'actionneur, la rotation en sens inverse étant empêchée par le blocage de l'organe de verrouillage sur ladite surface d'appui résultant de la masse du premier ensemble suspendue au second ensemble.

Ainsi, les opérations de verrouillage et de déverrouillage sont rendues entièrement automatiques respectivement grâce à l'actionneur et au ressort de rappel.

En outre, grâce au fait que le ressort de rappel soit intégré au verrou, les problèmes d'encombrement évoqués plus haut sont évités.

De préférence, le verrou comprend une partie cylindrique montée en rotation dans une partie fixe par rapport au premier ensemble et ledit ressort de rappel est un ressort hélicoïdal entourant une partie solidaire de ladite partie cylindrique de telle sorte que ce ressort soit sollicité en torsion lors de ladite rotation angulaire commandée.

Ainsi, ce ressort hélicoïdal n'encombre pas les parties situées à l'extérieur du verrou.

De préférence également, l'évidement réalisé dans le second ensemble a une forme oblongue et l'organe de verrouillage a une forme oblongue complémentaire de celle de l'évidement, de telle sorte qu'une rotation angulaire commandée de 90 degrés de cet organe de verrouillage a pour effet de croiser l'axe de la longueur de la forme oblongue de l'organe de verrouillage avec l'axe de la longueur de l'évidement oblong.

Ce croisement de l'organe de verrouillage par rapport à l'évidement met en appui les extrémités opposées de l'organe de verrouillage sur des surfaces d'appui opposées situées de part et d'autre de l'évidement ce qui permet de verrouiller l'organe de verrouillage.

De préférence, les deux surfaces d'appui opposées ci-dessus sont bordées latéralement par deux épaulements, ce qui permet de bloquer l'organe de verrouillage dans la position de verrouillage.

Pour déverrouiller l'organe de verrouillage il suffit de remonter légèrement l'organe de verrouillage par rapport à sa position d'appui ci-dessus, en soulevant le second ensemble pour que le ressort de rappel entraîne en rotation l'organe de verrouillage en sens inverse de la rotation commandée par l'actionneur pour le mettre en position de verrouillage, puis d'abaisser le second ensemble pour que l'organe de verrouillage se dégage de l'évidement.

Dans un mode de réalisation avantageux de l'invention, la partie du verrou qui est adjacente à l'organe de verrouillage est entourée par une pièce de guidage fixe dont la forme est adaptée pour pouvoir s'engager dans l'évidement oblong.

Cette pièce de guidage permet de guider le dégagement de l'organe de verrouillage de l'évidement lors du déverrouillage.

Dans une version préférée, le verrou comporte, entre l'organe de verrouillage et ladite partie cylindrique montée en rotation dans ladite partie fixe, une partie renflée comportant un évidement annulaire dans lequel est logé le ressort hélicoïdal.

On obtient ainsi une intégration optimale du ressort dans le verrou.

Dans une autre version préférée de l'invention, ladite partie cylindrique du verrou est prolongée à l'opposé de l'organe de verrouillage par un embout qui est relié par un mécanisme à l'actionneur de commande de la rotation angulaire dudit organe de verrouillage.

Dans un mode particulier de réalisation, le dispositif de verrouillage comprend plusieurs verrous identiques fixés sur le premier ensemble et un nombre égal d'évidements correspondants répartis sur le second ensemble de façon à pouvoir coopérer simultanément avec ces verrous.

Selon un autre aspect, l'invention concerne également l'application du dispositif à plusieurs verrous ci-dessus au montage d'un ensemble sous caisse complet sous la caisse d'un véhicule automobile, dans laquelle cet ensemble sous caisse est porté par une base porteuse et la caisse est portée par un support situé au-dessus de la base porteuse et dans laquelle la base porteuse est soulevée vers le support de la caisse pour la verrouiller à ce support au moyen de verrous fixés sur la base porteuse coopérant avec des évidements correspondants réalisés dans le support de la caisse.

Dans cette application, le support portant la caisse est une balancelle qui se déplace en continu, le verrouillage et le déverrouillage de la base porteuse audit support étant réalisés automatiquement sans interrompre le déplacement de ce support.

Les moyens actuels de verrouillage et de déverrouillage ne permettaient pas de réaliser ces opérations, sans interrompre le déplacement de la balancelle supportant la caisse.

D'autres particularités et avantages de l'invention apparaîtront encore tout au long de la description ci-après.

Aux dessins annexés, donnés à titre d'exemples, non limitatifs :
- la figure 1 est une vue en coupe suivant un plan passant par l'axe d'un dispositif de verrouillage selon l'invention, le verrou étant déverrouillé,
- la figure 2 est une vue en perspective du dispositif de verrouillage à l'état verrouillé,
- les figures 3 à 6 sont des vues en perspective montrant les étapes successives de verrouillage mises en oeuvre par le dispositif selon l'invention,
- les figures 7 à 9 sont des vues analogues aux figures 3 à 6 montrant les étapes successives de déverrouillage,
- la figure 10 est une vue schématique en élévation montrant le verrouillage réalisé au moyen de plusieurs verrous selon l'invention entre une base porteuse portant un ensemble sous caisse et une balancelle supportant une caisse de véhicule automobile,
- la figure 11 est une vue en coupe suivant le plan X-X de la figure 10.

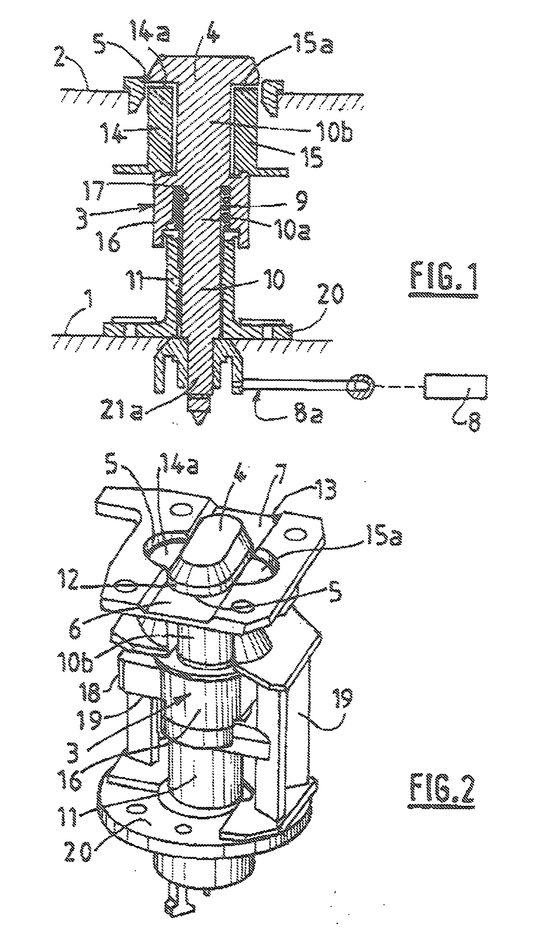

Les figures 1 et 2 représentent un dispositif pour verrouiller un premier ensemble 1 à un second ensemble 2 situé au-dessus du premier ensemble 1, comprenant un verrou 3 fixé sur le premier ensemble 1 qui comporte un organe de verrouillage 4 pouvant s'engager dans un évidement 5 réalisé sur le second ensemble 2, lors d'un déplacement relatif de l'un des deux ensembles par rapport à l'autre et se verrouiller sur une surface d'appui 6, 7 réalisée sur la périphérie de l'évidement 5 par rotation angulaire commandée de cet organe de verrouillage 4, à partir de la position déverrouillée représentée sur les figures 1 et 2.

Conformément à l'invention, le dispositif de verrouillage comprend un actionneur 8 (représenté schématiquement sur la figure 1) pour commander automatiquement la rotation angulaire de l'organe de verrouillage 4 afin de verrouiller celui-ci sur les surfaces d'appui 6, 7 et un ressort de rappel 9 intégré dans le verrou 3 pour commander le déverrouillage de l'organe de verrouillage par rapport aux surfaces d'appui 6, 7.

L'organe de verrouillage 4 coopère avec le ressort de rappel 9 de façon à mettre celui-ci sous tension mécanique lors de la rotation angulaire commandée par l'actionneur 8.

La rotation en sens inverse du verrou 3 est empêchée par le blocage de l'organe de verrouillage 4 sur les surfaces d'appui 6, 7 résultant de la masse du premier ensemble 1 qui est suspendu au second ensemble 2.

Dans l'exemple montré par les figures 1 et 2, le verrou 3 comprend une partie cylindrique 10 montée en rotation dans une partie fixe 11 en forme de manchon fixe par rapport au premier ensemble 1.

Le ressort de rappel 9 est un ressort hélicoïdal entourant une partie 10a prolongeant vers le haut la partie cylindrique 10, de telle sorte que ce ressort soit sollicité en torsion lors de la rotation angulaire commandée par l'actionneur 8.

On voit sur la figure 2 que l'évidement 5 réalisé dans le second ensemble 2 a une forme oblongue et l'organe de verrouillage 4 a une forme oblongue complémentaire de celle de l'évidement 5, de telle sorte qu'une rotation angulaire commandée de 90 degrés par l'actionneur 8 de cet organe de verrouillage 4 a pour effet de croiser l'axe de la longueur de la forme oblongue de l'organe de verrouillage 4 avec l'axe de la longueur de l'évidement oblong 5, comme montré sur la figure 2.

Cette figure 2 montre qu'en position de verrouillage, les extrémités opposées de l'organe de verrouillage 4 prennent appui sur deux surfaces opposées 6, 7 situées de part et d'autre de l'évidement 5 et bordées latéralement par des épaulements 12, 13 qui bloquent latéralement l'organe 4.

Par ailleurs, la partie 10b du verrou qui est adjacente à l'organe de verrouillage 4 est entourée par deux pièces de guidage fixes 14, 15 dont la forme est adaptée pour que les extrémités supérieures 14a, 15a de ces pièces puissent s'engager dans l'évidement oblong 5, comme montré notamment par la figure 1, de façon à guider l'engagement de l'organe de verrouillage 4 dans l'évidement 5.

Les figures 1 et 2 montrent en outre que le verrou 3 comporte entre l'organe de verrouillage 4 et la partie cylindrique 10 montée en rotation dans le manchon 11, une partie renflée 16 comportant un évidement annulaire 17 dans lequel est logé le ressort hélicoïdal 9.

Cette partie renflée 16 porte (voir figure 2) une partie saillante radiale 18 qui sert de butée pour limiter la rotation du verrou 3 vers la position verrouillée.

Cette butée prend appui contre l'un des deux montants 19 qui relient les deux pièces de guidage 15 à la base 20 du manchon 11 qui est fixée à l'ensemble 1.

Par ailleurs, la partie cylindrique 10 est prolongée à l'opposé de l'organe de verrouillage 4 par un embout 21a qui est relié (voir figure 1) à un mécanisme 8a à l'actionneur 8 de commande de la rotation angulaire de l'organe de verrouillage 4.

Le mécanisme 8a peut être par exemple du type permettant de transformer un mouvement linéaire en un mouvement de rotation.

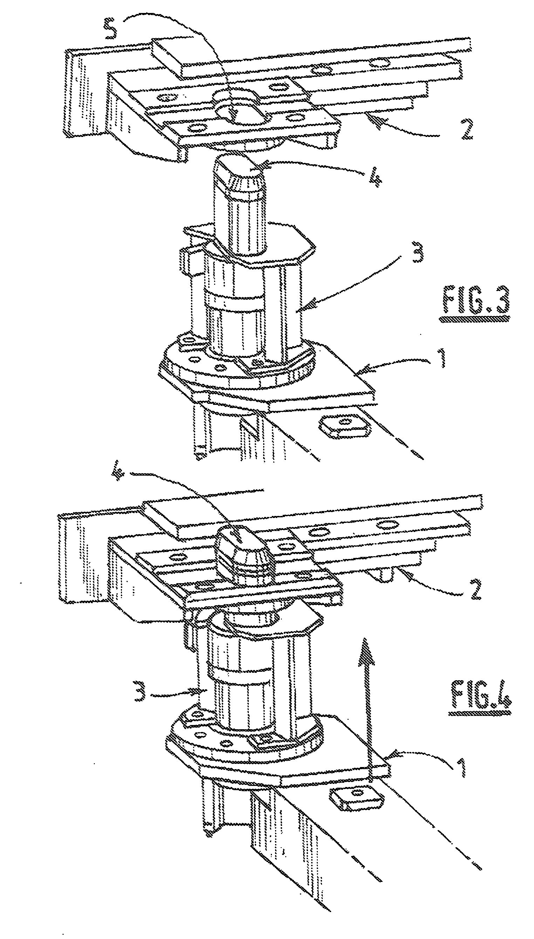

On va maintenant expliquer en référence aux figures 3 à 9 le fonctionnement du dispositif de verrouillage que l'on vient de décrire.

Les figures 3 à 6 illustrent les étapes successives du verrouillage.

Dans l'étape 1 montrée sur la figure 3, le verrou 3 fixé sur l'ensemble 1 se dirige selon un mouvement vertical vers l'évidement 5 de l'ensemble 2.

Dans l'étape 2 (voir figure 4), l'organe de verrouillage 4 du verrou est engagé dans l'évidement 5.

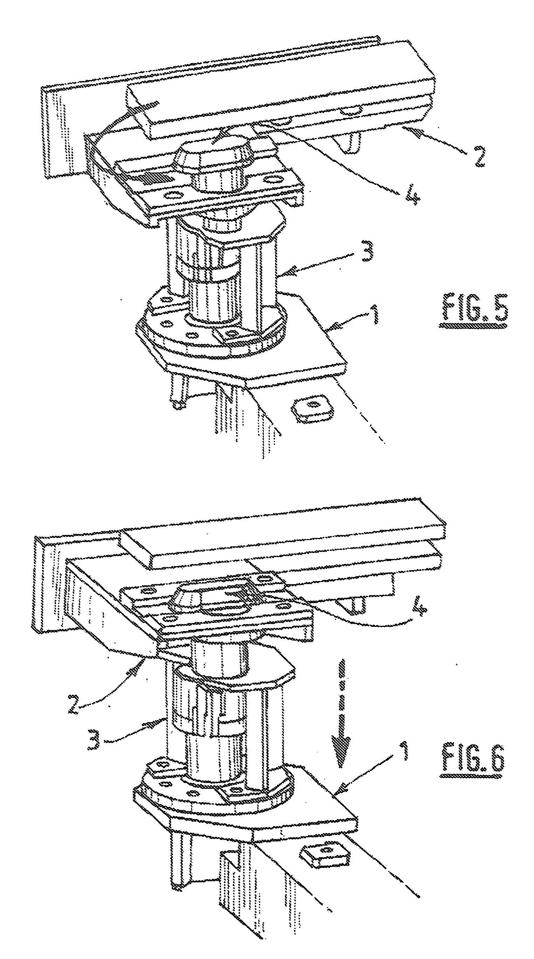

Dans l'étape 3 (voir figure 5), l'organe de verrouillage 4 a tourné de 90 degrés, cette rotation ayant été commandée automatiquement par l'actionneur 8.

Dans l'étape 4 (voir figure 6), l'ensemble 1 est descendu pour mettre l'organe de verrouillage 4 en appui sur les surfaces d'appui 6, 7 représentées sur la figure 2.

La masse de l'ensemble 1 (voir flèche en pointillé) assure l'irréversibilité du verrouillage.

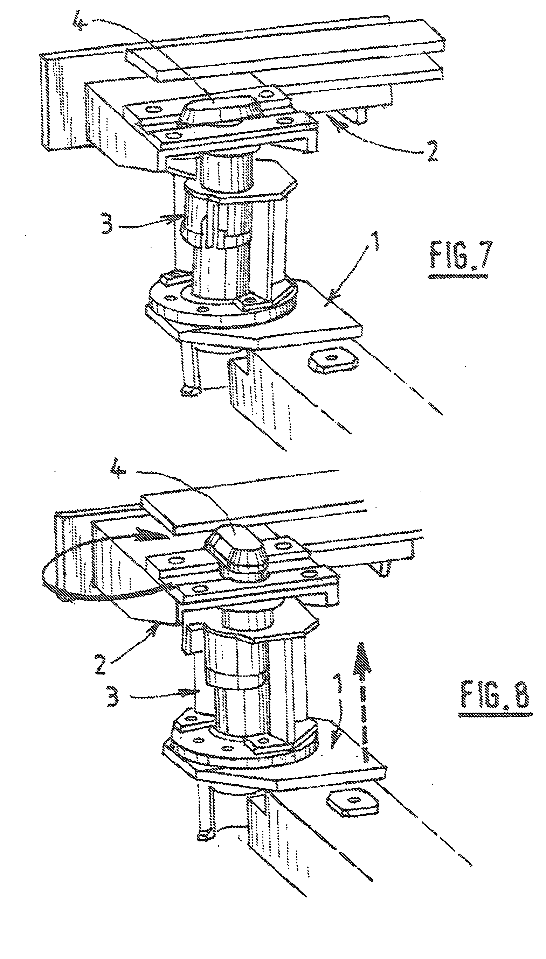

Les figures 7 à 9 illustrent les étapes successives du déverrouillage.

Dans la position montrée sur la figure 7, le verrou 3 est en position de verrouillage.

La figure 8 montre que l'ensemble 1 a été soulevé (voir flèche en pointillé) pour que l'organe de verrouillage 4 quitte sa position d'appui.

Le ressort de rappel 9 du verrou fait tourner automatiquement l'organe de verrouillage 4 de 90 degrés dans le sens inverse de la rotation commandée par l'actionneur.

Le verrou est alors déverrouillé de l'ensemble 2 sans aucun actionneur ni intervention manuelle d'un opérateur.

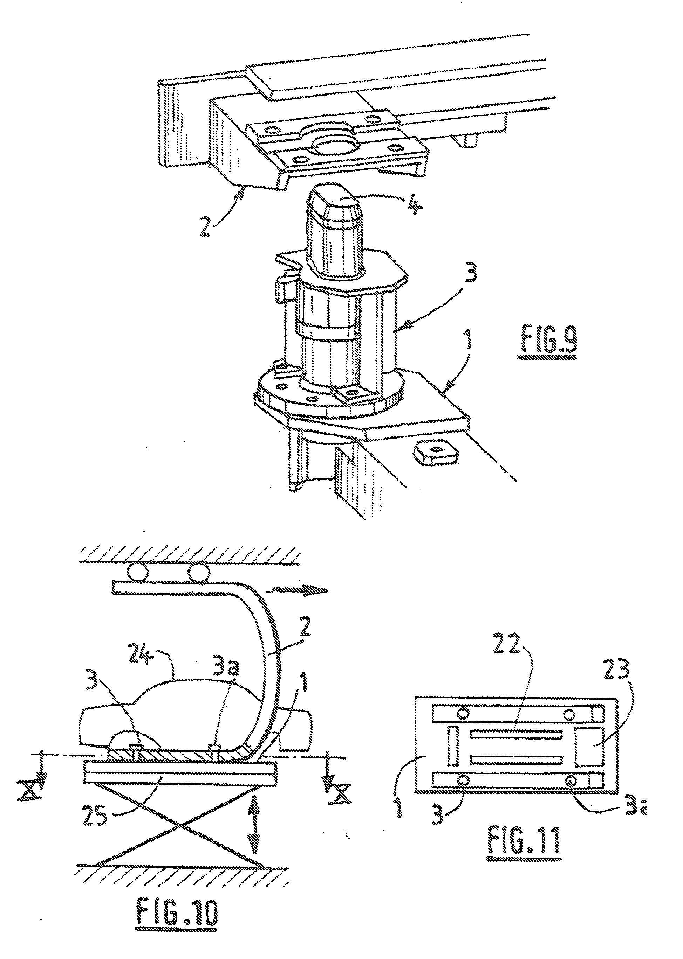

Il suffit ensuite de dégager le verrou en descendant l'ensemble 1 comme montré par la figure 9.

Les figures 10 et 11 illustrent une application préférée du dispositif de verrouillage décrit précédemment.

Dans cette application, le dispositif de verrouillage comprend plusieurs verrous 3, 3a identiques fixés sur le premier ensemble 1 et un nombre égal d'évidements 5 correspondants répartis sur le second ensemble 2 de façon à pouvoir coopérer simultanément avec ces verrous.

Il s'agit ici d'une installation de montage d'un ensemble sous caisse complet désigné par les références 21, 22, 23 sur la figure 11 sous la caisse 24 d'un véhicule automobile.

Dans cette installation, cet ensemble sous caisse 21, 22, 23 est porté par une base porteuse 1 et la caisse 24 est portée par une balancelle 2 située au-dessus de la base porteuse 1.

La base porteuse 1 est soulevée par une table élévatrice 25 vers la balancelle 2 supportant la caisse pour la verrouiller à cette balancelle au moyen de verrous 3, 3a fixés sur la base porteuse 1 coopérant avec des évidements (non représentés) réalisés dans la partie inférieure de la balancelle 2.

Les verrous 3 et 3a sont identiques à celui représenté sur les figures 1 et 2 et fonctionnent comme montré par les figures 3 à 9, c'est-à-dire automatiquement.

Ces verrous sont capables de supporter une charge de deux tonnes.

De plus, dans le cas de l'application illustrée par les figures 10 et 11, les verrous 3, 3a peuvent assurer le verrouillage et le déverrouillage de la base porteuse 1 par rapport à la balancelle 2 sans interrompre le déplacement de celle-ci.

## Revendications

1. Dispositif pour verrouiller un premier ensemble (1) à un second ensemble (2) situé au-dessus du premier ensemble (1), comprenant au moins un verrou (3) fixé sur le premier ensemble (1) et comportant un organe de verrouillage (4) pouvant s'engager dans un évidement (5) réalisé sur le second ensemble (2), lors d'un déplacement relatif de l'un des deux ensembles (1, 2) par rapport à l'autre, et se verrouiller sur une surface d'appui réalisée sur la périphérie de l'évidement (5) par rotation angulaire commandée de cet organe de verrouillage (4), comprenant un actionneur (8) pour commander la rotation angulaire de l'organe de verrouillage (4) afin de verrouiller celui-ci sur ladite surface d'appui et un ressort de rappel (9) intégré dans le verrou (3) pour commander le déverrouillage de l'organe de verrouillage (4) de ladite surface d'appui, **caractérisé en ce que** ledit organe de verrouillage (4) coopère avec le ressort de rappel (9) de façon à mettre celui-ci, sous tension mécanique lors de la rotation angulaire commandée par l'actionneur (8), la rotation en sens inverse étant empêchée par le blocage de l'organe de verrouillage (4) sur ladite surface d'appui résultant de la masse du premier ensemble (1) suspendue au second ensemble (2).

2. Dispositif selon la revendication 1, **caractérisé en ce que** le verrou (3) comprend une partie cylindrique (10) montée en rotation dans une partie fixe (11) par rapport au premier ensemble (1) et ledit ressort de rappel (9) est un ressort hélicoïdal entourant une partie (10a) solidaire de ladite partie cylindrique (10) de telle sorte que ce ressort (9) soit sollicité en torsion lors de ladite rotation angulaire commandée.

3. Dispositif selon l'une des revendications 1 ou 2, **caractérisé en ce que** l'évidement (5) réalisé dans le second ensemble (2) a une forme oblongue et l'organe de verrouillage (4) a une forme oblongue complémentaire de celle de l'évidement (5), de telle sorte qu'une rotation angulaire commandée de 90 degrés de cet organe de verrouillage (4) a pour effet de croiser l'axe de la longueur de la forme oblongue de l'organe de verrouillage (4) avec l'axe de la longueur de l'évidement oblong (5).

4. Dispositif selon la revendication 3, **caractérisé en ce qu'**en position de verrouillage, les extrémités opposées de l'organe de verrouillage (4) prennent appui sur deux surfaces opposées (6, 7) situées de part et d'autre de l'évidement (5) et bordées latéralement par des épaulements (12, 13).

5. Dispositif selon l'une des revendications 3 ou 4, **caractérisé en ce que** la partie (10b) du verrou qui est adjacente à l'organe de verrouillage (4) est entourée par une pièce de guidage (14, 15) fixe dont la forme est adaptée pour pouvoir s'engager dans l'évidement oblong (5).

6. Dispositif selon l'une des revendications 2 à 5, **caractérisé en ce que** le verrou (3) comporte, entre l'organe de verrouillage (4) et ladite partie cylindrique (10) montée en rotation dans ladite partie fixe (11), une partie renflée (16) comportant un évidement annulaire (17) dans lequel est logé le ressort hélicoïdal (9).

7. Dispositif selon l'une des revendications 2 à 6, **caractérisé en ce que** ladite partie cylindrique (10) est prolongée à l'opposé de l'organe de verrouillage (4) par un embout (21a) qui est relié par un mécanisme (8a) à l'actionneur (8) de commande de la rotation angulaire dudit organe de verrouillage (4).

8. Dispositif selon l'une des revendications 1 à 7, **caractérisé en ce qu'**il comprend plusieurs verrous identiques (3, 3a) fixés sur le premier ensemble (1) et un nombre égal d'évidements (5) correspondants répartis sur le second ensemble (2) de façon à pouvoir coopérer simultanément avec ces verrous (3, 3a).

9. Application du dispositif selon la revendication 8 au montage d'un ensemble sous caisse complet (21, 22, 23) sous la caisse (24) d'un véhicule automobile, dans laquelle cet ensemble sous caisse est porté par une base porteuse (1) et la caisse (24) est portée par un support (2) situé au-dessus de la base porteuse (1) et dans laquelle la base porteuse (1) est soulevée vers le support (2) de la caisse pour la verrouiller à ce support (2) au moyen de verrous (3, 3a) fixés sur la base porteuse (1) coopérant avec des évidements correspondants réalisés dans le support (2) de la caisse.

10. Application selon la revendication 9, dans laquelle le support (2) portant la caisse (24) se déplace en continu, le verrouillage et le déverrouillage de la base porteuse (1) audit support (2) étant réalisés automatiquement sans interrompre le déplacement de ce support (2).

## Claims

1. Device for locking a first assembly (1) to a second assembly (2) located above the first assembly (1), comprising at least one latch (3) fixed to the first assembly (1) and comprising a locking member (4) that can be engaged in a recess (5) formed on the second assembly (2), upon a relative displacement of one of the two assemblies (1, 2) relative to the other, and can be locked onto a bearing surface produced on the periphery of the recess (5) by controlled angular rotation of this locking member (4), comprising an actuator (8) for controlling the angular rotation of the locking member (4) in order to lock said member onto said bearing surface and a return spring (9) incorporated in the latch (3) to control the unlocking of the locking member (4) from said bearing surface, **characterized in that** said locking member (4) cooperates with the return spring (9) so as to mechanically tension the latter upon the angular rotation controlled by the actuator (8), the reverse rotation being prevented by the immobilizing of the locking member (4) on said bearing surface resulting from the weight of the first assembly (1) suspended from the second assembly (2).

2. Device according to Claim 1, **characterized in that** the latch (3) comprises a cylindrical portion (10) mounted to rotate in a fixed portion (11) relative to the first assembly (1) and said return spring (9) is a helical spring surrounding a portion (10a) securely attached to said cylindrical portion (10) so that this spring (9) is torsionally stressed upon said controlled angular rotation.

3. Device according to one of Claims 1 or 2, **characterized in that** the recess (5) formed in the second assembly (2) has an oblong shape and the locking member (4) has an oblong shape complementing that of the recess (5), so that a controlled angular rotation of 90 degrees of this locking member (4) results in the crossing of the lengthwise axis of the oblong shape of the locking member (4) with the lengthwise axis of the oblong recess (5).

4. Device according to Claim 3, **characterized in that**, in the locking position, the opposite ends of the locking member (4) bear on two opposite surfaces (6, 7) situated on either side of the recess (5) and bordered laterally by shoulders (12, 13).

5. Device according to one of Claims 3 or 4, **characterized in that** the portion (10b) of the latch which is adjacent to the locking member (4) is surrounded by a fixed guiding piece (14, 15) whose shape is adapted to be able to be engaged in the oblong recess (5).

6. Device according to one of Claims 2 to 5, **characterized in that** the latch (3) comprises, between the locking member (4) and said cylindrical portion (10) mounted to rotate in said fixed portion (11), a bulging portion (16) including an annular recess (17) in which the helical spring (9) is housed.

7. Device according to one of Claims 2 to 6, **characterized in that** said cylindrical portion (10) is extended opposite the locking member (4) by a tip (21a) which is linked by a mechanism (8a) to the actuator (8) controlling the angular rotation of said locking member (4).

8. Device according to one of Claims 1 to 7, **characterized in that** it comprises a number of identical latches (3, 3a) fixed to the first assembly (1) and an equal number of corresponding recesses (5) distributed over the second assembly (2) so as to be able to cooperate simultaneously with these latches (3, 3a) .

9. Application of the device according to Claim 8 to the mounting of a complete under-shell assembly (21, 22, 23) under the shell (24) of an automotive vehicle, in which this under-shell assembly is borne by a supporting base (1) and the shell (24) is borne by a support (2) situated above the supporting base (1) and in which the supporting base (1) is raised toward the support (2) of the shell to lock it to this support (2) by means of latches (3, 3a) fixed to the supporting base (1) cooperating with corresponding recesses formed in the support (2) of the shell.

10. Application according to Claim 9, in which the support (2) bearing the shell (24) is displaced continuously, the locking and the unlocking of the supporting base (1) to and from said support (2) being carried out automatically without interrupting the displacement of this support (2).

## Patentansprüche

1. Vorrichtung zum Verriegeln einer ersten Einheit (1) an einer zweiten Einheit (2), die sich oberhalb der ersten Einheit (1) befindet, die mindestens einen an der ersten Einheit (1) befestigten Riegel (3) enthält und ein Verriegelungsorgan (4) aufweist, das sich bei einer relativen Verschiebung einer der zwei Einheiten (1, 2) bezüglich der anderen in eine auf der zweiten Einheit (2) ausgebildete Aussparung (5) einfügen und sich durch gesteuerte Winkeldrehung dieses Verriegelungsorgans (4) auf einer am Umfang der Aussparung (5) ausgebildeten Auflagefläche verriegeln kann, die einen Stellantrieb (8), um die Winkeldrehung des Verriegelungsorgans (4) zu steuern, um dieses auf der Auflagefläche zu verriegeln, und eine Rückstellfeder (9) enthält, die in den Riegel (3) integriert ist, um die Entriegelung des Verriegelungsorgans (4) von der Auflagefläche zu steuern, **dadurch gekennzeichnet, dass** das Verriegelungsorgan (4) so mit der Rückstellfeder (9) zusammenwirkt, dass diese bei der durch den Stellantrieb (8) gesteuerten Winkeldrehung mechanisch gespannt wird, wobei die Drehung in Gegenrichtung durch die Blockierung des Verriegelungsorgans (4) auf der Auflagefläche verhindert wird, die aus der Masse der an der zweiten Einheit (2) aufgehängten ersten Einheit (1) resultiert.

2. Vorrichtung nach Anspruch 1, **dadurch gekennzeichnet, dass** der Riegel (3) einen zylindrischen Teil (10) enthält, der drehbar in einen bezüglich der ersten Einheit (1) ortsfesten Teil (11) montiert ist, und die Rückstellfeder (9) eine Schraubenfeder ist, die einen Teil (10a) umgibt, der fest mit dem zylindrischen Teil (10) verbunden ist, so dass diese Feder (9) bei der gesteuerten Winkeldrehung torsionsbeaufschlagt wird.

3. Vorrichtung nach einem der Ansprüche 1 oder 2, **dadurch gekennzeichnet, dass** die in der zweiten Einheit (2) ausgebildete Aussparung (5) eine längliche Form hat, und das Verriegelungsorgan (4) eine zu derjenigen der Aussparung (5) komplementäre längliche Form hat, so dass eine gesteuerte Winkeldrehung dieses Verriegelungsorgans (4) um 90 Grad zur Wirkung hat, die Achse der Länge der länglichen Form des Verriegelungsorgans (4) mit der Achse der Länge der länglichen Aussparung (5) zu kreuzen.

4. Vorrichtung nach Anspruch 3, **dadurch gekennzeichnet, dass** in der Verriegelungsstellung die entgegengesetzten Enden des Verriegelungsorgans (4) auf zwei entgegengesetzten Flächen (6, 7) aufliegen, die sich zu beiden Seiten der Aussparung (5) befinden und seitlich von Schultern (12, 13) umrandet sind.

5. Vorrichtung nach einem der Ansprüche 3 oder 4, **dadurch gekennzeichnet, dass** der Teil (10b) des Riegels, der dem Verriegelungsorgan (4) benachbart ist, von einem ortsfesten Führungsbauteil (14, 15) umgeben ist, dessen Form geeignet ist, um sich in die längliche Aussparung (5) einfügen zu können.

6. Vorrichtung nach einem der Ansprüche 2 bis 5, **dadurch gekennzeichnet, dass** der Riegel (3) zwischen dem Verriegelungsorgan (4) und dem drehbar in den ortsfesten Teil (11) montierten zylindrischen Teil (10) einen ausgebauchten Teil (16) aufweist, der eine ringförmige Aussparung (17) aufweist, in der die Schraubenfeder (9) untergebracht ist.

7. Vorrichtung nach einem der Ansprüche 2 bis 6, **dadurch gekennzeichnet, dass** der zylindrische Teil (10) entgegengesetzt zum Verriegelungsorgan (4) von einem Ansatz (21a) verlängert wird, der durch einen Mechanismus (8a) mit dem Stellantrieb (8) zur Steuerung der Winkeldrehung des Verriegelungsorgans (4) verbunden ist.

8. Vorrichtung nach einem der Ansprüche 1 bis 7, **dadurch gekennzeichnet, dass** sie mehrere gleiche Riegel (3, 3a), die an der ersten Einheit (1) befestigt sind, und eine gleiche Anzahl von entsprechenden Aussparungen (5) enthält, die auf der zweiten Einheit (2) so verteilt sind, dass sie gleichzeitig mit diesen Riegeln (3, 3a) zusammenwirken können.

9. Anwendung der Vorrichtung nach Anspruch 8 bei der Montage einer kompletten Unterbodeneinheit (21, 22, 23) unter der Karosserie (24) eines Kraftfahrzeugs, bei der diese Unterbodeneinheit von einer tragenden Bodenplatte (1) getragen wird, und die Karosserie (24) von einem Träger (2) getragen wird, der sich oberhalb der tragenden Bodenplatte (1) befindet, und bei der die tragende Bodenplatte (1) zum Träger (2) der Karosserie angehoben wird, um sie an diesem Träger (2) mittels Riegeln (3, 3a) zu verriegeln, die an der tragenden Bodenplatte (1) befestigt sind und mit entsprechenden Aussparungen zusammenwirken, die im Träger (2) der Karosserie ausgebildet sind.

10. Anwendung nach Anspruch 9, bei der der die Karosserie (24) tragende Träger (2) sich durchgehend verschiebt, wobei die Verriegelung der tragenden Bodenplatte (1) am und ihre Entriegelung vom Träger (2) automatisch ohne Unterbrechung der Verschiebung dieses Trägers (2) durchgeführt werden.
